# EUROPÄISCHE PATENTSCHRIFT

(11) **EP 1 607 427 B1**
(45) Veröffentlichungstag und Bekanntmachung des Hinweises auf die Patenterteilung: **23.08.2006**
(21) Anmeldenummer: 05011381.0
(22) Anmeldetag: 25.05.2005
(51) Int. Cl.: C08G 77/26, C08G 77/46, C08G 77/458, C08G 18/08, C08G 18/32, C08G 18/61, C08G 18/83, D06M 15/643, D06M 15/647, D06M 15/653

(54) **Hydrophile Siloxancopolymere und Verfahren zu deren Herstellung**
Hydrophilic siloxane copolymers and process for their preparation
Copolymères hydrophiles de siloxanes et procédé de leur préparation

(30) Priorität: 03.06.2004 DE 102004027003
(43) Veröffentlichungstag der Anmeldung: 21.12.2005
(73) Patentinhaber: Wacker Chemie AG, 81737 München (DE)
(72) Erfinder: Ochs, Christian, Dr., 84489 Burghausen (DE); Herzig, Christian, Dr., 83329 Waging (DE)
(74) Vertreter: Deffner-Lehner, Maria

(56) Entgegenhaltungen:
- WO-A-02/088209
- WO-A-20/04056907
- GB-A- 1 128 642
- US-A- 5 643 581
- US-B1- 6 365 697
- PATENT ABSTRACTS OF JAPAN Bd. 2002, Nr. 04, 4. August 2002 (2002-08-04) & JP 2001 336071 A (DOW CORNING TORAY SILICONE CO LTD), 7. Dezember 2001 (2001-12-07)

## Beschreibung

Die Erfindung betrifft hydrophile Siloxancopolymere und ein Verfahren zu ihrer Herstellung.

US-A 5,001,210 beschreibt eine Methode zur Herstellung von Polyurethanen, bei der aminofunktionelle Siloxantelechele nach Umsatz mit cyclischen Carbonaten mit Di- oder Poly-isocyanaten in die Zielprodukte überführt werden. Polyether werden in Form von Diaminopolyethern verwendet, die im Vergleich zu Polyetherdiolen und -monoolen teuer sind.

In EP-A 1 178 069 ist die Herstellung von Polyetherurethanzwischenstufen beschrieben, indem Alkenylpolyether mit Diisocyanaten umgesetzt werden und an diese Silane, die hydrolyseempfindliche Gruppen tragen, addiert werden. Siloxankettenpolymere sind so nicht erhältlich.

Verzweigte Polyethersiloxane sind aus Chemical Abstracts 136: 38808 bekannt. Hydrogensiloxane werden mit Divinylsiloxanen und Allylpolyether gleichzeitig umgesetzt. Überschüssige Polyethermengen verbleiben ungebunden im Produktgemisch. Die Produkte werden als Textilweichmacher verwendet und sind frei von Urethan- und Harnstoffgruppen.

In US 2003/0032726 bzw. der korrespondierenden WO 02/088209 ist ein Reaktionsprodukt beschrieben aus (A) Polyisocyanat, (B) Silicon, das ein Dimethylpolysiloxansegment und eine oder mehrere Isocyanat-reaktive Gruppen enthält, (C) Reaktant mit einer oder mehreren Isocyanat-reaktiven Gruppen und einer oder mehreren ionisierbaren Gruppen und (D) gegebenenfalls einer organischen Substanz, die eine oder mehrere Isocyanat-reaktive Gruppen aber keine ionisierbare Gruppen enthält und (E) Verbindung, die das Gegenion für genannte ionisierbare Gruppen liefert, wobei entweder das Silicon (B) oder der Reaktant (C) oder beide eine einzige Isocyanat-reaktive Gruppe enthält.

In US 2003/0032751 ist ein Reaktionsprodukt beschrieben aus (A) Polyisocyanat, (B) Silicon, das ein Dimethylpolysiloxansegment und eine oder mehrere Isocyanat-reaktive Gruppen enthält, (C) Reaktant mit einer oder mehreren Isocyanat-reaktiven Gruppen und einer oder mehreren ionisierbaren Gruppen und (D) gegebenenfalls einer organischen Substanz, die eine oder mehrere Isocyanat-reaktive Gruppen aber keine ionisierbare Gruppen enthält und (E) Verbindung, die das Gegenion für genannte ionisierbare Gruppen liefert, wobei das durchschnittliche Molekulargewicht des Reaktionsproduktes 600 bis 20 000 ist.

Die Einführung solcher ionisierbaren Gruppen dient vornehmlich dem Zweck, die Kompatibilität der erhaltenen Siloxancopolymere mit wässrigen Systemen zu erhöhen. Nach dem Stand der Technik werden hierfür bei textilen oder kosmetischen Applikationen vorzugsweise Ammoniumgruppen, insbesondere quartäre Ammoniumgruppen (sog. Quatgruppen), eingesetzt, da diese mit den jeweiligen schwach negativ geladenen Substratoberflächen besonders gut wechselwirken und so zu einer verbesserten Substantivität und Waschpermanenz führen können. Beispielhaft sei an dieser Stelle auf die Klasse der quatfunktionellen Siloxan-Polyether-Copolymere in WO 02/10256 A1, WO 02/10257 A1, WO 02/10259 A1 und WO 03/078504 A1 verwiesen. Den dort offengelegten Verbindungen ist jedoch gemeinsam, dass sie nur über aufwändige mehrstufige Synthesen zugänglich sind, ein lediglich befriedigendes Aufziehverhalten (Substantivität) aufweisen und nur begrenzt waschpermanent sind. Insbesondere jedoch besitzen die zuvor zitierten Verbindungen keine selbstdipergierenden Eigenschaften. Der Instabilität der entsprechenden wässrigen Emulsionen gegenüber basischen Bedingungen sowie der Einwirkung von hohem mechanischem Energieintrag, wie sie z. B. bei den modernen Jetsystemen auftreten, kann daher bislang nur durch Zugabe großer Mengen von Tensiden und/oder Salzen mehrwertiger Kationen, wie Al₂(SO₄)₃·18 H₂O, M_{g}Cl₂·6H₂O o.ä., begegnet werden (WO 03/095735 A2).

Es bestand daher die Aufgabe, hydrophile Siloxancopolymere bereitzustellen, wobei die hydrophilen Segmente oder Blöcke durch organische Gruppen unterbrochen sind, die als Donoren oder Akzeptoren bei der Ausbildung von Wasserstoffbrücken wirken und somit zu einer deutlich verbesserten Substantivität und Waschpermanenz führen. Weiterhin bestand die Aufgabe, hydrophile Siloxancopolymere bereitzustellen, die in einem einfachen Verfahren herstellbar sind, und die in Wasser leicht zu dispergieren sind, insbesondere selbstdispergierend sind, d.h. ohne Mitverwendung von grenzflächenaktiven Verbindungen eine Emulsion, insbesondere Microemulsion, bilden, wobei die Emulsion auch im alkalischen Milieu und unter den Bedingungen moderner "Jet-Applikationen", d.h. unter dem Einfluss von Scherkräften, stabil ist. Die Aufgabe wird durch die Erfindung gelöst.

Gegenstand der Erfindung sind hydrophile Siloxancopolymere herstellbar indem

### (a) in einem ersten Schritt

Organopolysiloxane (1), die pro Molekül mindestens ein Si-gebundenes Wasserstoffatom, vorzugsweise mindestens zwei Si-gebundene Wasserstoffatome, aufweisen, mit
weitgehend linearen oligomeren oder polymeren Verbindungen (2) der allgemeinen Formel

R¹-(A-CₙH₂ₙ)ₘ-A¹-H (I),

wobei R¹ einen einwertigen gegebenenfalls substituierten Kohlenwasserstoffrest bedeutet, an den Si-H-Gruppen in einer Hydrosilylierungsreaktion angelagert werden können, vorzugsweise einen aliphatische C-C-Mehrfachbindung aufweisenden Kohlenwasserstoffrest bedeutet,
A einen zweiwertigen, polaren organischen Rest ausgewählt aus der Gruppe von -O- , -C(O)-O- , -O-C(O)- , -O-C(O)-O- , -C(O)-NH- , -NH-C(O)- , Urethanrest und Harnstoffrest, vorzugsweise ein Sauerstoffatom -O-, bedeutet,
A¹ einen zweiwertigen, polaren organischen Rest ausgewählt aus der Gruppe von -O- , -NH- und -NR'- (wobei R' einen einwertigen Kohlenwasserstoffrest mit 1 bis 18 Kohlenstoffatomen bedeutet), vorzugsweise ein Sauerstoffatom -O-, bedeutet,
n eine ganze Zahl von 1 bis 20, vorzugsweise 1 bis 4, bevorzugt 2 oder 3, ist und
m gleich 0 oder eine ganze positive Zahl, vorzugsweise 5 bis 50, ist,
umgesetzt werden,

### (b) in einem zweiten Schritt

die so erhaltenen H-A¹-Gruppen aufweisenden Zwischenprodukte (4) mit organischen Verbindungen (5), die pro Molekül mindestens zwei Isocyanatgruppen aufweisen, umgesetzt werden, wobei die Umsetzung in Anwesenheit von weiteren organischen Verbindungen (6), welche gegenüber Isocyanatgruppen reaktiv sind und mindestens eine tertiäre Amingruppe enthalten, stattfindet, und
wobei die organischen Verbindungen (5), die pro Molekül mindestens zwei Isocyanatgruppen aufweisen, in Mengen von 0,5 bis 1,0 Mol Isocyanatgruppe je Mol der in Summe in den Zwischenprodukten (4) und den organischen Verbindungen (6) enthaltenen, mit Isocyanatgruppen reaktiven Gruppen eingesetzt werden,

### (c) in einem dritten Schritt

die Amingruppen-haltigen Zwischenprodukte (7) aus Schritt (b) mit einem Alkylierungsmittel (8) teilweise oder vollständig quarterniert werden,
mit der Maßgabe, dass der Wassergehalt der zur Herstellung der hydrophilen Siloxancopolymere eingesetzten Verbindungen (1) und (2) niedriger ist als 2000 Gew.-ppm, vorzugsweise niedriger ist als 1500 Gew.-ppm, bevorzugt niedriger ist als 1000 Gew.-ppm, jeweils bezogen auf das Gesamtgewicht von Verbindungen (1) und (2).

Der Wassergehalt bezieht sich auf Raumtemperatur (20°C) und dem Druck der umgebenden Atmosphäre (1020 hPa).

Die erfindungsgemäßen Siloxancopolymere besitzen eine Viskosität von vorzugsweise 1 000 bis 100 000 000 mPa·s bei 25°C, bevorzugt 10 000 bis 10 000 000 mPa·s bei 25°C.

Gegenstand der Erfindung ist weiterhin ein Verfahren zur Herstellung von hydrophilen Siloxancopolymeren indem

### (a) in einem ersten Schritt

Organopolysiloxane (1), die pro Molekül mindestens ein Si-gebundenes Wasserstoffatom, vorzugsweise mindestens zwei Si-gebundene Wasserstoffatome, aufweisen, mit
weitgehend linearen oligomeren oder polymeren Verbindungen (2) der allgemeinen Formel

R¹-(A-CₙH₂ₙ)ₘ-A¹-H (I),

wobei R¹ einen einwertigen gegebenenfalls substituierten Kohlenwasserstoffrest bedeutet, an den Si-H-Gruppen in einer Hydrosilylierungsreaktion angelagert werden können, vorzugsweise einen aliphatische C-C-Mehrfachbindung aufweisenden Kohlenwasserstoffrest bedeutet,
A einen zweiwertigen, polaren organischen Rest ausgewählt aus der Gruppe von -O- , -C(O)-O- , -O-C(O)- , -O-C(O)-O- , -C(O)-NH- , -NH-C(O)- , Urethanrest und Harnstoffrest, vorzugsweise ein Sauerstoffatom -O-, bedeutet,
A¹ einen zweiwertigen, polaren organischen Rest ausgewählt aus der Gruppe von -O- , -NH- und -NR²- (wobei R² einen einwertigen Kohlenwasserstoffrest mit 1 bis 18 Kohlenstoffatomen bedeutet), vorzugsweise ein Sauerstoffatom -O-, bedeutet,
n eine ganze Zahl von 1 bis 20, vorzugsweise 1 bis 4, bevorzugt 2 oder 3, ist und
m gleich 0 oder eine ganze positive Zahl, vorzugsweise 5 bis 50, ist,
umgesetzt werden,

### (b) in einem zweiten Schritt

die so erhaltenen H-A¹-Gruppen aufweisenden Zwischenprodukte (4) mit organischen Verbindungen (5), die pro Molekül mindestens zwei Isocyanatgruppen aufweisen, umgesetzt werden, wobei die Umsetzung in Anwesenheit von weiteren organischen Verbindungen (6), welche gegenüber Isocyanatgruppen reaktiv sind und mindestens eine tertiäre Amingruppe enthalten, stattfindet, und
wobei die organischen Verbindungen (5), die pro Molekül mindestens zwei Isocyanatgruppen aufweisen, in Mengen von 0,5 bis 1,0 Mol Isocyanatgruppe je Mol der in Summe in den Zwischenprodukten (4) und den organischen Verbindungen (6) enthaltenen, mit Isocyanatgruppen reaktiven Gruppen eingesetzt werden,

### (c) in einem dritten Schritt

die Amingruppen-haltigen Zwischenprodukte (7) aus Schritt (b) mit einem Alkylierungsmittel (8) teilweise oder vollständig quarterniert werden,
mit der Maßgabe, dass der Wassergehalt der zur Herstellung der hydrophilen Siloxancopolymere eingesetzten Verbindungen (1) und (2) niedriger ist als 2000 Gew.-ppm, vorzugsweise niedriger ist als 1500 Gew.-ppm, bevorzugt niedriger ist als 1000 Gew.-ppm, jeweils bezogen auf das Gesamtgewicht von Verbindungen (1) und (2).

Im ersten Verfahrensschritt (a) werden als Organopolysiloxane (1) vorzugsweise lineare, cyclische oder verzweigte Organopolysiloxane aus Einheiten der allgemeinen Formel 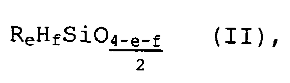 wobei
R gleich oder verschieden sein kann und einen einwertigen, gegebenenfalls substituierten Kohlenwasserstoffrest mit 1 bis 18 Kohlenstoffatom(en) je Rest bedeutet,
e 0, 1, 2 oder 3,
f 0, 1 oder 2
und die Summe von e+f 0, 1, 2 oder 3 ist,
mit der Maßgabe, dass pro Molekül mindestens ein Si-gebundenes Wasserstoffatom, bevorzugt mindestens 2 Si-gebundene Wasserstoffatome vorliegen, verwendet.

Bevorzugt werden als Organopolysiloxane (1) solche der allgemeinen Formel

H_{g}R_{3-g}SiO(SiR₂O)ₒ(SiRHO)ₚSiR₃-_{g}H_{g} (III)

wobei R die oben dafür angegebene Bedeutung hat,
g 0, 1 oder 2,
o 0 oder eine ganze Zahl von 1 bis 1500 und
p 0 oder eine ganze Zahl von 1 bis 200 ist,
mit der Maßgabe, dass pro Molekül mindestens ein Si-gebundenes Wasserstoffatom, bevorzugt mindestens zwei Si-gebundene Wasserstoffatome, vorliegen, verwendet.

Im Rahmen dieser Erfindung soll Formel (III) so verstanden werden, dass o Einheiten -(SiR₂O)- und p Einheiten -(SiRHO)- in beliebiger Weise im Organopolysiloxanmolekül verteilt sein können.

Besonders bevorzugt ist g in Formel (III) 1 und p in Formel (III) 0 und es werden als Organopolysiloxane (1)
α,ω-Dihydrogenpolydiorganosiloxane, insbesondere
α,ω-Dihydrogenpolydimethylsiloxane, eingesetzt.

Die Organopolysiloxane (1) besitzen vorzugsweise eine durchschnittliche Viskosität von 10 bis 1 000 mPa.s bei 25°C.

Beispiele für Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest; Cycloalkylreste, wie Cyclopentyl-, Cyclohexyl-, Cycloheptyl- und Methylcyclohexylreste; Arylreste, wie der Phenyl-, Naphthyl-, Anthryl- und Phenanthrylrest; Alkarylreste, wie o-, m-, p-Tolylreste, Xylylreste und Ethylphenylreste; und Aralkylreste, wie der Benzylrest, der α- und der β-Phenylethylrest.

Beispiele für substituierte Reste R sind Halogenalkylreste, wie der 3,3,3-Trifluor-n-propylrest, der 2,2,2,2',2',2'-Hexafluorisopropylrest, der Heptafluorisopropylrest und Halogenarylreste, wie der o-, m- und p-Chlorphenylrest.

Bevorzugt handelt es sich bei dem Rest R um einen einwertigen Kohlenwasserstoffrest mit 1 bis 6 Kohlenstoffatomen, wobei der Methylrest besonders bevorzugt ist.

Beispiele für Reste R gelten im vollen Umfang für Reste R'.

R¹ bedeutet vorzugsweise einen einwertigen, Kohlenwasserstoffrest mit aliphatischer C-C-Mehrfachbindung.

Beispiele für Reste R¹ sind Alkenylreste, wie der Vinyl-, 5-Hexenyl-, Cyclohexenyl-, 1-Propenyl-, Allyl-, 3-Butenyl- und 4-Pentenylrest, und Alkinylreste, wie der Ethinyl-, Propargyl- und 1-Propinylrest.

Bevorzugt handelt es sich bei dem Rest R¹ um einen Alkenylrest, insbesondere ω-Alkenylrest, wobei der Allylrest besonders bevorzugt ist.

Bevorzugt als oligomere oder polymere (m>0) Verbindungen (2) sind Polyether der allgemeinen Formel

H₂C=CH-R²-(OCₙH₂ₙ)ₘ-OH (IV),

wobei R² ein zweiwertiger Kohlenwasserstoffrest mit 1 bis 20 Kohlenstoffatomen, bevorzugt ein Rest der Formel -CH₂-, -CH(CH₃)- oder -C(CH₃)₂- ist und
n und m die oben dafür angegebene Bedeutung haben.

Bevorzugte Beispiele für Polyether (2) sind solche der allgemeinen Formel

H₂C=CH-R²-(OCH₂CH₂)ₐ[OCH₂CH(CH₃)]_{b}-OH (IV'),

wobei R² die oben dafür angegebene Bedeutung hat und
a und b 0 oder eine ganze Zahl von 1 bis 200 ist, mit der Maßgabe, dass die Summe a+b mindestens 1 ist, vorzugsweise 5 bis 50 ist.

Weitere Beispiele für oligomere oder polymere Verbindungen (2) sind ungesättigte Polyester, wie H₂C=CH-R²-[O(O)CCₙH₂ₙ]ₘ-OH, ungesättigte Polycarbonate, wie H₂C=CH-R²- [OC(O)OCₙH₂ₙ]ₘ-OH und ungesättigte Polyamide, wie H₂C=CH-R²- [NHC (O)CₙH₂ₙ]ₘ-NH₂, wobei R², n und m die oben dafür angegebene Bedeutung haben.

Bevorzugt als monomere (m=0) Verbindungen (2) sind ungesättigte Verbindungen der Formel H₂C=CH-R^{2'}-OH, wobei R^{2'} die Bedeutung von R² hat und bevorzugt einen Rest der Formel -(CH₂)ₙ-, mit n in der obigen Bedeutung, darstellt. Bevorzugte monomere Verbindungen (2) sind Allylalkohol, 5-Hexenol und 7-Octenol.

Die Verbindungen (2) werden im ersten Verfahrensschritt (a) vorzugsweise in Mengen von 1,0 bis 4,0, bevorzugt 1,3 bis 2,5 Mol Rest R¹, der vorzugsweise ein Rest mit aliphatischer C-C-Mehrfachbindung ist, bevorzugt ein ω-Alkenylrest ist, je Grammatom Si-gebundenem Wasserstoff im Organopolysiloxan (1) eingesetzt.

Überschüssig eingesetzte monomere Verbindungen (2) können entweder im Reaktionsgemisch belassen oder destillativ ganz oder teilweise entfernt werden, soweit es deren Flüchtigkeit erlaubt.

Im ersten Verfahrensschritt (a) werden vorzugsweise die Anlagerung von Si-gebundenem Wasserstoff an aliphatische Mehrfachbindung fördernde Katalysatoren (3) eingesetzt. Als Katalysatoren (3) können auch bei dem erfindungsgemäßen Verfahren die gleichen Katalysatoren eingesetzt werden, die auch bisher zur Förderung der Anlagerung von Si-gebundenem Wasserstoff an aliphatische Mehrfachbindung eingesetzt werden konnten. Bei den Katalysatoren handelt es sich vorzugsweise um ein Metall aus der Gruppe der Platinmetalle oder um eine Verbindung oder einen Komplex aus der Gruppe der Platinmetalle.

Beispiele für solche Katalysatoren sind metallisches und feinverteiltes Platin, das sich auf Trägern, wie Siliciumdioxyd, Aluminiumoxyd oder Aktivkohle befinden kann, Verbindungen oder Komplexe von Platin, wie Platinhalogenide, z.B. PtCl₄, H₂PtCl₆*6H₂O, Na₂PtCl₄*4H₂O, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungs-produkten aus H₂PtCl₆*6H₂O und Cyclohexanon, Platin-Vinyl-siloxankomplexe, wie Platin-1,3-Divinyl-1,1,3,3-tetra-methyl-disiloxankomplexe mit oder ohne Gehalt an nachweisbarem anorganisch gebundenem Halogen, Bis-(gamma-picolin)-platindichlorid, Trimethylendipyridinplatindichlorid, Dicyclopentadienplatindichlorid, Dimethylsulfoxydethylenplatin-(II)-di-chlorid, Cyclooctadien-Platindichlorid, Norbornadien-Platindichlorid, Gamma-picolin-Platindichlorid, Cyclopentadien-Platindichlorid, sowie Umsetzungsprodukte von Platintetrachlorid mit Olefin und primärem Amin oder sekundärem Amin oder primärem und sekundärem Amin, wie das Umsetzungsprodukt aus in 1-Octen gelöstem Platintetrachlorid mit sec.-Butylamin oder Ammonium-Platinkomplexe.

Der Katalysator (3) wird im ersten Verfahrensschritt (a) vorzugsweise in Mengen von 1 bis 50 Gew.-ppm (Gewichtsteilen je Million Gewichtsteilen), bevorzugt in Mengen von 2 bis 20 Gew.-ppm, jeweils berechnet als elementares Platin und bezogen auf das Gesamtgewicht der Organopolysiloxane (1) und Verbindungen (2) eingesetzt.

Der erste Verfahrensschritt (a) wird vorzugsweise beim Druck der umgebenden Atmosphäre, also etwa bei 1020 hPa (abs.), durchgeführt, es kann aber auch bei höheren oder niedrigeren Drücken durchgeführt werden. Ferner wird der erste Verfahrensschritt vorzugsweise bei einer Temperatur von 60°C bis 140°C, bevorzugt 80°C bis 120°C, durchgeführt.

Im zweiten Verfahrensschritt (b) werden als organische Verbindungen (5), die pro Molekül mindestens zwei Isocyanatgruppen aufweisen, bevorzugt solche der allgemeinen Formel

O=C=N-R³-N=C=O (V),

wobei R³ einen zweiwertigen Kohlenwasserstoffrest mit 4 bis 40 Kohlenstoffatomen je Rest bedeutet,
eingesetzt.

Beispiele für organische Verbindungen (5) sind Hexamethylen-1,6-diisocyanat, Isophorondiisocyanat, Tolylen-2,4-diisocyanat, Tolylen-2,6-diisocyanat, Phenylen-1,3-diisocyanat, 4,4'-Methylen-bis(cyclohexylisocyanat), 4,4'-Methylen-bis(phenylisocyanat) und Dimethylphenyldiisocyanat.

Organische Verbindungen (5) werden im zweiten Verfahrensschritt (b) vorzugsweise in Mengen von 0,8 bis 1,0 Mol, Isocyanatgruppe je Mol der in Summe in den Zwischenprodukten (4) und den organischen Verbindungen (6) enthaltenen, mit Isocyanatgruppen reaktiven Gruppen eingesetzt. Somit ist ein sicheres Abreagieren der gesundheitsgefährdenden Isocyanatgruppen stets gewährleistet.

In den eingangs erwähnten US 2003/0032726 und US 2003/0032751 wird Polyisocyanat bezogen auf die Isocyanat-reaktiven Gruppen immer im deutlichen Überschuss verwendet, im Gegensatz zu dem erfindungsgemäßen Verfahren. Von geringeren Mengen wird in den eingangs erwähnten US-Schriften abgeraten, da sie die Viskosität des Produktes erhöhen, was damit schwierig zu handhaben ist und ein Lösungsmittel erforderlich macht. Es herrscht damit ein deutliches Vorurteil gegen die erfindungsgemäße Verwendung des Polyisocyanates (5) im Unterschuss von 0,5 bis 1,0 Mol.

Im zweiten Verfahrensschritt (b) werden als organische Verbindungen (6), welche gegenüber Isocyanatgruppen reaktiv sind und die mindestens eine tertiäre Amingruppe enthalten, bevorzugt solche der allgemeinen Formeln

HX-R⁵-NR⁴₂ (VI),

HX-R⁶(NR⁴₂)₂ (VII),

HX-R⁷(NR⁴₂)₃ (VIII),

(HX)₂R⁶-NR⁴₂ (IX),

HR⁸N-R⁵-NR⁴₂ (X),

eingesetzt, wobei
R⁴ einen Rest R, der gegebenenfalls Sauerstoff-, Schwefel- oder Stickstoffatome enthalten kann, vorzugsweise einen Methyl-, Ethyl- oder Propylrest, der gegebenenfalls einen Hydroxy- und/oder peralkylierten Aminrest enthalten kann, bedeutet,
R⁵ einen zweiwertigen Kohlenwasserstoffrest mit 1 bis 100 Kohlenstoffatomen, bevorzugt mit 1 bis 50 Kohlenstoffatomen, insbesondere bevorzugt mit 1 bis 20 Kohlenstoffatomen, der durch Sauerstoff-, Schwefel- oder Stickstoffatome unterbrochen oder substituiert sein kann, bedeutet,
R⁶ einen dreiwertigen organischen Rest mit 1 bis 100 Kohlenstoffatomen je Rest, vorzugsweise einen dreiwertigen Kohlenwasserstoffrest mit 1 bis 100 Kohlenstoffatomen, bevorzugt mit 1 bis 20 Kohlenstoffatomen, insbesondere bevorzugt mit 1 bis 10 Kohlenstoffatomen, der ein oder mehrere Sauerstoffatome enthält, bedeutet,
R⁷ einen vierwertigen organischen Rest mit 1 bis 100 Kohlenstoffatomen je Rest, vorzugsweise einen vierwertigen Kohlenwasserstoffrest mit 1 bis 20 Kohlenstoffatomen, der ein oder mehrere Sauerstoffatome enthält, bedeutet,
R⁸ Wasserstoffatom oder R⁴ bedeutet, und
X die Bedeutung von Sauerstoffatom oder Schwefelatom, vorzugsweise Sauerstoffatom, besitzt.

Beispiele für organische Verbindungen (6) der allgemeinen Formel (VI) sind N,N-Dimethylethanolamin, N,N-Diethylpropanolamin, N-(3-Aminopropyl)-N-methyl-ethanolamin, N-(Dimethyl-3-aminopropyl)-N-methyl-ethanolamin, N,N-Dimethyl-2-(2-aminoethoxy)ethanol, N-Methyldiethanolamin, N-Methyldipropanolamin, N-Dodecyldiethanolamin, N-Stearyldipropanolamin, Dimethylaminopropyldipropanolamin, Triethanolamin, N,N-Bis(dimethylaminopropyl)-2-hydroxyethylamin, N,N-Bis(dimethylaminopropyl)-2-hydroxy-propylamin, N,N-Dimethyl-2-mercaptoethylamin und N,N-Diethyl-3-mercaptopropylamin.

### Beispiele für organische Verbindungen (6) der allgemeinen Formel (VII) sind 1,5-Bis(dimethylamino)-pentan-3-ol, 1,7-Bis(dimethylamino)-heptan-4-ol, 1,5-Bis(dimethylamino)-pentan-3-thiol und 1,7-Bis(dimethylamino)-heptan-4-thiol

Beispiele für organische Verbindungen (6) der allgemeinen Formel (VIII) sind 2,4,6-Tris(dimethylaminomethyl)-phenol, 1,1,1-Tris(dimethylaminomethyl)-methanol, 2,4,6-Tris(dimethylaminomethyl)-cyclohexanol, 2,4,6-Tris(dimethylaminomethyl)-thiophenol, 1,1,1-Tris(dimethylaminomethyl)-methanthiol und 2,4,6- Tris(dimethylaminomethyl)-cyclohexanthiol.

Beispiele für organische Verbindungen (6) der allgemeinen Formel (IX) sind N,N-Bis(dimethylaminopropyl)-3-aminopropan-1,2-diol, N,N-Bis(dimethylaminopropyl)-2-aminopropan-1,3-diol, und N,N-Bis(3-dimethylaminopropyl)-carbaminosäuremonoglycerid.

Beispiele für organische Verbindungen (6) der allgemeinen Formel (X) sind N,N-Dimethyl-ethylendiamin, N,N-Diethyl-ethylendiamin, N,N-Dimethyl-N'-methyl-ethylendiamin, N,N-Dimethylpropylendiamin, N,N-Dimethyl-N'-methyl-propylendiamin, N,N-Bis(dimethyl-3-aminopropyl)amin, N,N-Bis(3-aminopropyl)-methylamin, N-Methyl-N'-(2-aminoethyl)-piperazin, N-(3-Aminopropyl)-morpholin und N-(3-Aminopropyl)-imidazol.

Die Verbindungen der Formel (VI) bis (X) dienen somit der Möglichkeit, in das Siloxancopolymer quarternierbaren Stickstoff einzuführen.

Organische Verbindungen (6) werden im zweiten Verfahrensschritt (b) in Mengen von vorzugsweise 0,01 bis 1 Mol, bevorzugt 0,05 bis 1 Mol, HX- bzw. HR⁸N-Gruppe je Mol H-A¹-Gruppe im Zwischenprodukt (4) eingesetzt.

Der zweite Verfahrensschritt (b) wird vorzugsweise beim Druck der umgebenden Atmosphäre, also etwa bei 1020 hPa (abs.), durchgeführt, es kann aber auch bei höheren oder niedrigeren Drücken durchgeführt werden. Ferner wird der zweite Verfahrensschritt vorzugsweise bei einer Temperatur von 40°C bis 140°C, bevorzugt 60°C bis 100°C, durchgeführt.

Für die Umsetzung im zweiten Schritt (b) des erfindungsgemäßen Verfahrens können weiterhin Kondensationskatalysatoren (9), wie Di-n-butylzinndilaurat, Zinn-II-octoat, Dibutylzinndiacetat, Zinkdilaurat, Wismuttrilaurat, Kaliumoctoat oder tert. Amine, welche keine weiteren funktionellen Gruppen aufweisen, die gegenüber Isocyanatgruppen reaktiv sind, wie z. B. Dimethylcyclohexylamin, Pentamethyldipropylentriamin, N-Methylimidazol oder N-Ethyl-morpholin, eingesetzt werden.

Im dritten Verfahrensschritt (c) werden als Alkylierungsmittel (8) vorzugsweise Alkylhalogenide, Dialkylsulfate, Sulfonsäureester, Epoxide, Chlorhydrine sowie Oniumsalze des Sauerstoffs oder Schwefels, besonders bevorzugt Alkylhalogenide, Sulfonsäureester und Epoxide, verwendet.

Beispiele für geeignete Alkylierungsmittel (8) sind Methyl- bzw. Ethylchlorid, -bromid und -jodid, Dodecylbromid, Benzylchlorid, Chloressigsäure und Chloressigsäurester, Dimethylsulfat, Diethylsulfat, die Methylester der Fluorsulfonsäure, der Chlorsulfonsäure, der Methansulfonsäure, der Trifluormethansulfonsäure, der p-Toluolsulfonsäure und der Naphthylsulfonsäure, 2,2-Dimethyloxiran, 1,2-Propylenoxid, 1,2-Epoxybutan, 2,3-Epoxypropylisopropylether, 2,3-Epoxypropylbutylether, Allylglycidylether, 2,3-Epoxypropyltrimethylammoniumchlorid, 3-Chlor-1-methoxy-2-propanol, 3-Chlor-1,2-propandiol, Epichlorhydrin, 3-Chlor-2-hydroxypropyltrimethylammoniumchlorid sowie Meerwein-Salze, wie z. B. Trimethyloxoniumtetrafluoroborat, Triethyloxoniumhexafluorophosphat und Trimethylsulfonium hydroxid. Bevorzugte Beispiele sind Methylchlorid, Methyljodid, Dodecylbromid, Benzylchlorid, Chloressigsäure, Dimethylsulfat und p-Toluolsulfonsäuremethylester.

Alkylierungsmittel (8) werden im dritten Verfahrensschritt (c) in Mengen von vorzugsweise 0,1 bis 1,1 Mol, bevorzugt 0,2 bis 1 Mol, je Mol tertiäre Amingruppe in Zwischenprodukte (7) eingesetzt.

Der dritte Verfahrensschritt (c) wird vorzugsweise beim Druck der umgebenden Atmosphäre, also etwa bei 1020 hPa (abs.), durchgeführt, er kann aber auch bei höheren oder niedrigeren Drücken durchgeführt werden. Ferner wird der dritte Verfahrensschritt vorzugsweise bei einer Temperatur von 0°C bis 200°C, bevorzugt 20°C bis 150°C, besonders bevorzugt 50°C bis 130°C, durchgeführt.

Ein bevorzugtes Siloxancopolymer wird beispielsweise erhalten, indem im ersten Verfahrensschritt ein α,ω-Dihydrogenpolydiorganosiloxan (1) im Überschuss mit einem Polyether (2) der Formel (IV) umgesetzt wird, im zweiten Verfahrensschritt das Zwischenprodukt (4), ein HO-Polyether-Polysiloxan-Polyether-OH, in Anwesenheit eines tert. Alkanolamins (6) der Formel (VI) mit einem Diisocyanat (5) der Formel (V) zur Reaktion gebracht wird, wobei gleichzeitig Urethan- und tertiäre Amin-Gruppen in das Siloxancopolymer eingeführt werden und auch freier Polyether aus dem 1. Schritt durch Urethanbildung gebunden wird, und im dritten Verfahrensschritt das Zwischenprodukt (7), ein Polysiloxan-Polyether-Copolymer bestehend aus der Wiederholungseinheit

-[(CₙH₂ₙO)ₘ-R²-CH₂CH₂-R₂SiO(R₂SiO)ₒ-R₂SiO-CH₂CH₂R²-(OCₙH₂ₙ)ₘ-OC(O)NH-R³-NHC(O)O]ₓ- (XI)

sowie den Endgruppen

CH₂=CH-R²-(OCₙH₂ₙ)ₘ-OC(O)NH-R³-NHC(O)O- (XII) bzw.

-(CₙH₂ₙO)ₘ-R²-CH=CH₂ (XII')

und

R⁴₂N-R⁵-OC(O)NH-R³-NHC(O)O- (XIII) bzw.

-R⁵-NR⁴₂ (XIII')

wobei R, R², R³, R⁴, R⁵, n, m und o die oben dafür angegebene Bedeutung haben und
x eine ganze Zahl von 1 bis 20, vorzugsweise 1 bis 4, ist, mit p-Toluolsulfonsäuremethylester als Alkylierungsmittel (8) quarterniert wird. Das so erhaltene Siloxancopolymer besteht aus der Wiederholungseinheit

- [(CₙH₂ₙO)ₘ-R²-CH₂CH₂-R₂SiO(R₂SiO)ₒ-R₂SiO-CH₂CH₂-R²-(OCₙH₂ₙ)ₘ-OC(O)NH-R³-NHC(O)O]ₓ- (XI)

sowie den Endgruppen

CH₂=CH-R²-(OCₙH₂ₙ)ₘ-OC(O)NH-R³-NHC(O)O- (XII) bzw.

-(CₙH₂ₙO)ₘ-R²-CH=CH₂ (XII')

R⁴₂N-R⁵-OC(O)NH-R³-NHC(O)O- (XIII) bzw.

-R5-NR⁴₂ (XIII')

und

[(CH₃)R4₂N-R⁵-OC(O)NH-R³-NHC(O)O-]⁺CH₃C₆H₄SO₃⁻ (XIV) bzw.

[-R⁵-NR⁴₂(CH₃)]⁺CH₃C₆H₄SO₃⁻ (XIV'),

wobei R, R², R³, R⁴, R⁵, n, m, o und x die zuvor dafür angegebene Bedeutung haben.

Ein weiteres bevorzugtes Siloxancopolymer wird analog zu der zuvor geschilderten Vorgehensweise beispielsweise erhalten, indem im zweiten Verfahrensschritt ein tert. Amin (6) der Formel (X) verwendet wird. Das erhaltene Siloxancopolymer besteht dann aus der Wiederholungseinheit

- [(CₙH₂ₙO)ₘ-R²-CH₂CH₂-R₂SiO(R₂SiO)ₒ-R₂SiO-CH₂CH₂-R²-(OCₙH₂ₙ)ₘ-OC(O)NH-R³-NHC(O)O]ₓ₋₁- (XI)

sowie den Endgruppen

CH₂=CH-R²-(OCₙH₂ₙ)ₘ-OC(O)NH-R³-NHC(O)O- (XII) bzw.

-(CₙH₂ₙO)ₘ-R²-CH₂CH₂-R₂SiO(R₂SiO)ₒ-R₂SiO-CH₂CH₂-R²-(OCₙH₂ₙ)ₘ-OC(O)NH-R³-NHC(O)O-(CₙH₂ₙO)ₘ-R²-CH=CH₂ (XII'),

R⁴₂N-R⁵-NR⁸-C(O)NH-R³-NHC(O)O- (XIII) bzw.

-(CₙH₂ₙO)ₘ-R²-CH₂CH₂-R₂SiO(R₂SiO)ₒ-R₂SiO-CH₂CH₂-R²-(OCₙH₂ₙ)ₘ-OC(O)NH-R³-NHC(O)-NR⁸-R⁵-NR⁴₂ (XIII')

und

[(CH₃) R⁴₂N-R⁵-OC(O)NH-R³-NHC(O)O-]⁺CH₃C₆H₄SO₃⁻ (XIV) bzw.

[-(CₙH₂ₙO)ₘ=R²-CH₂CH₂-R₂SiO(R₂SiO)ₒ-R₂SiO-CH₂CH₂-R²-(OCₙH₂ₙ)ₘ-OC(O)NH-R³-NHC(O)-NR⁸-R⁵-NR⁴₂(CH₃)]⁺CH₃C₆H₄SO₃⁻ (XIV'),

wobei R, R², R³, R⁴, R⁵, R⁸, n, m, o und x die zuvor dafür angegebene Bedeutung haben.

Die Urethangruppen in den erfindungsgemäßen hydrophilen Siloxancopolymeren können als Donoren und Akzeptoren bei der Ausbildung von Wasserstoffbrücken wirken, während die quartären Stickstoffgruppen einer Erhöhung der Hydrophilie und der Löslichkeit der erfindungsgemäßen hydrophilen Siloxancopolymere einerseits, sowie einer verbesserten Stabilität der wässrigen Emulsionen im basischen Milieu und unter den Applikationsbedingungen moderner Jetsysteme, d.h. unter dem Einfluss von Scherkräften, andererseits dienen.

Zur Erniedrigung der teilweise sehr hohen Produktviskositäten können gegebenenfalls niedermolekulare Stoffe, wie Alkohole oder Ether zugesetzt werden. Beispiele hierfür sind Ethanol, Isopropanol, n-Butanol, 2-Butoxyethanol, Diethylenglycolmonobutylether, Tetrahydrofuran, Diethylenglycoldiethylether und Dimethoxyethan, wobei Diethylenglycolmonobutylether ein bevorzugtes Beispiel ist. Bevorzugte Zusatzmengen sind im Fall sehr viskoser Produkte bis zu 50 Gew.-%, besonders bevorzugt bis zu 30 Gew.-%, bezogen auf die erfindungsgemäßen hydrophilen Siloxancopolymere. Derartige Zusätze haben außerdem den Vorteil, dass die daraus entstehenden Produkte in Wasser leichter dispergierbar sind als die reinen Siloxancopolymere.

Die erfindungsgemäßen Siloxancopolymere können leicht in Wasser ohne weitere Hilfsstoffe, wie Emulgatoren, dispergiert werden, sind damit selbstdispergierend, und ergeben Emulsionen, insbesondere Microemulsionen.

Gegenstand der Erfindung sind daher Emulsionen, vorzugsweise Microemulsionen, enthaltend
(A) erfindungsgemäße hydrophile Siloxancopolymere und
(B) Wasser.

Die Emulsion enthält vorzugsweise 20 bis 60, bevorzugt 30 bis 50 Gew.-% der erfindungsgemäßen hydrophilen Siloxancopolymere (A).

Gegenstand der Erfindung ist weiterhin ein Verfahren zur Herstellung der Emulsionen, vorzugsweise Microemulsionen, durch Vermischen von
(A) erfindungsgemäßen hydrophilen Siloxancopolymeren mit
(B) Wasser.

Technologien zur Herstellung von Siliconemulsionen sind bekannt. Üblicherweise erfolgt die Herstellung durch einfaches Verrühren der erfindungsgemäßen Siloxancopolymere mit Wasser und gegebenenfalls anschließendes Homogenisieren mit Rotor-Stator-Homogenisatoren, Kolloidmühlen oder Hochdruckhomogenisatoren.

Die erfindungsgemäßen Siloxancopolymere oder deren Emulsionen können verwendet werden als hydrophile Weichmacher in der Textilindustrie, als hydrophile Weichspüler oder als hydrophil wirkende Additive bei der Herstellung und Ausrüstung von Fasern und Non-wovens. Die erfindungsgemäßen Verbindungen zeichnen sich insbesondere durch ihre einfache Synthese, ihre hohe Substantivität, die leichte Herstellbarkeit ihrer wässrigen Emulsionen (Selbstdispergierung) sowie deren hohe Beständigkeit im basischen Milieu und unter den Applikationsbedingungen moderner Jetsysteme, d.h. unter dem Einfluss von Scherkräften, aus. Darüber hinaus verleihen die erfindungsgemäßen Verbindungen oder deren Emulsionen textilen Geweben, Fasern und Non-Wovens eine hohe Hydrophilie sowie einen exzellenten Weichgriff bei gleichzeitig sehr guter Waschpermanenz.

In den nachstehend beschriebenen Beispielen beziehen sich alle Viskositätsangaben auf eine Temperatur von 25°C. Sofern nicht anders angegeben, werden die nachstehenden Beispiele bei einem Druck der umgebenden Atmosphäre, also etwa bei 1020 hPa, und bei Raumtemperatur, also bei etwa 23°C, bzw. bei einer Temperatur, die sich beim Zusammengeben der Komponenten bei Raumtemperatur ohne zusätzliche Heizung oder Kühlung einstellt, durchgeführt. Des weiteren beziehen sich alle Angaben von Teilen und Prozentsätzen, soweit nichts anderes angegeben ist, auf das Gewicht.

### Beispiel 1:

500 g eines α,ω-Dihydrogenpolydiorganosiloxans mit 0,055 Gew.-% Si-gebundenem Wasserstoff und einem Wassergehalt von 50 Gew.-ppm werden mit 203 g eines Polyethers der Formel

H₂C=CH-CH₂-(OCH₂CH₂)_{10,7}-OH,

enthaltend 686 Gew.-ppm Wasser, gemischt und auf 100°C erwärmt. Dann werden 0,8 g Hexachloroplatinsäure-Lösung (0,48 %-ig bezogen auf elementares Platin) zudosiert, worauf die Temperatur des Reaktionsgemisches auf 120 °C ansteigt und ein klares Produkt entsteht. Nach einer Stunde bei 100 bis 110°C wird vollständiger Umsatz des Si-gebundenen Wasserstoffs erreicht. Das Polyether-Polysiloxan-Zwischenprodukt hat eine Viskosität von etwa 820 mm²/s bei 25°C.

Es werden nun 9,81 g N,N-Dimethylethanolamin und 41,6 g Hexamethylendiisocyanat (0,999 Mol Isocyanatgruppe je Mol Summe der Isocyanat-reaktiven Gruppen im Zwischenprodukt (4) und in N,N-Dimethylethanolamin (6)) nacheinander zudosiert und eine Stunde bei 100°C rühren gelassen. Währenddessen tritt eine deutliche Viskositätszunahme auf. Das so erhaltene Zwischenprodukt besitzt einen Gehalt an protonierbaren Amingruppen von etwa 14,57 mequ./100 g.

Man kühlt auf 80°C ab, gibt 150 g Diethylenglykolmonobutylether sowie 20,5 g p-Toluolsulfonsäuremethylester zu und lässt eine weitere Stunde bei dieser Temperatur rühren. Man erhält ein klares, bräunliches Öl.

40 g des hochviskosen Öls werden bei 50°C mit 60 g Wasser vermischt. Unter leichtem Rühren bildet sich eine Emulsion mit einem Urethangehalt von 0,214 mequ./g (Emulsion 1).

### Vergleichsbeispiel 1:

Die Synthese aus Beispiel 1 wird wiederholt, wobei nach Lösen der Zwischenstufe in Diethylenglykolmonobutylether statt der Alkylierung mit p-Toluolsulfonsäuremethylester eine Protonierung der tert. Amingruppen mit 6,6 g Essigsäure (100 %) durchgeführt wird. Man erhält ein klares, schwach bräunliches Öl.

40 g des hochviskosen Öls werden bei 50°C mit 60 g Wasser vermischt. Unter leichtem Rühren bildet sich eine Emulsion mit einem Urethangehalt von 0,268 mequ./g (Vergleichsemulsion 1).

### Beispiel 2:

500 g eines α,ω-Dihydrogenpolydiorganosiloxans mit 0,055 Gew.-% Si-gebundenem Wasserstoff und einem Wassergehalt von 50 Gew.-ppm werden mit 807,7 g eines Allyalkoholethoxylat/propyloxylats der Formel

H₂C=CH-CH₂-(OCH₂CH₂)ₐ[(OCH₂CH(CH₃)]_{b}-OH,

mit einem Verhältnis a : b = 1,0, einem Wassergehalt von 978 Gew.-ppm und einer Jodzahl von 12,1 (als Jodzahl wird die Zahl bezeichnet, welche die bei der Addition an die aliphatische Mehrfachbindung verbrauchte Jodmenge in Gramm pro 100 Gramm eingesetztes, zu untersuchendes Material angibt) vermischt und auf 100°C erwärmt. Dann werden 1,63 g Hexachloroplatinsäure-Lösung (0,48 %-ig bezogen auf elementares Platin) zudosiert, worauf die Temperatur des Reaktionsgemisches auf 120 °C ansteigt und ein klares Produkt entsteht. Nach zwei Stunden bei 100 bis 110°C wird vollständiger Umsatz des Si-gebundenen Wasserstoffs erreicht. Das Polyether-Polysiloxan-Zwischenprodukt hat eine Viskosität von etwa 1120 mm²/s bei 25°C.

Es werden nun 10,3 g N,N-Bis(dimethyl-3-aminopropyl)amin, 37 g Hexamethylendiisocyanat und 1 Tropfen Di-n-butylzinndilaurat nacheinander zudosiert und eine Stunde bei 100°C rühren gelassen. Währenddessen tritt eine deutliche Viskositätszunahme auf. Das so erhaltene Zwischenprodukt besitzt einen Gehalt an protonierbaren Amingruppen von etwa 8,107 mequ./100 g.

Anschließend kühlt man auf 80°C ab, gibt 275 g Diethylenglykolmonobutylether sowie 20,48 g p-Toluolsulfonsäuremethylester zu und lässt eine weitere Stunde bei dieser Temperatur rühren. Man erhält ein klares, schwach gelbliches Öl, welches keine protonierbaren Amingruppen mehr aufweist.

40 g des hochviskosen Öls werden bei 50°C mit 60 g Wasser vermischt. Unter leichtem Rühren bildet sich eine Emulsion mit einem Urethangehalt von 0,106 mequ./g (Emulsion 2).

### Beispiel 3:

Zu 100 g des Polyether-Polysiloxan-Zwischenproduktes aus Beispiel 1 (OH-Gehalt: ca. 0,548 mequ./g) werden 2,94 g N,N-Bis(dimethyl-3-aminopropyl)amin, 5,92 g Hexamethylendiisocyanat und 1 Tropfen Di-n-butylzinndilaurat nacheinander zudosiert und eine Stunde bei 100°C rühren gelassen. Währenddessen tritt eine deutliche Viskositätszunahme auf. Das so erhaltene Zwischenprodukt besitzt einen Gehalt an protonierbaren Amingruppen von etwa 28,84 mequ./100 g.

Anschließend kühlt man auf 80°C ab, gibt 23 g Diethylenglykolmonobutylether sowie 5,83 g p-Toluolsulfonsäuremethylester zu und lässt eine weitere Stunde bei dieser Temperatur rühren. Man erhält ein klares, schwach bräunliches Öl, welches keine protonierbaren Amingruppen mehr aufweist.

40 g des hochviskosen Öls werden bei 50°C mit 60 g Wasser vermischt. Unter leichtem Rühren bildet sich eine Emulsion mit einem Urethangehalt von 0,205 mequ./g (Emulsion 3).

### Beispiel 4:

Zu 500 g des Polyether-Polysiloxan-Zwischenproduktes aus Beispiel 1 (OH-Gehalt: ca. 0,548 mequ./g) werden 22,32 g eines Polyethers der Formel

H₂C=CH-CH₂-(OCH₂CH₂)_{10,7}-OH,

enthaltend 686 Gew.-ppm Wasser, 19,74 g N,N-Bis(dimethyl-3-aminopropyl)amin und 35,45 g Hexamethylendiisocyanat nacheinander zudosiert und eine Stunde bei 100°C rühren gelassen. Währenddessen tritt eine deutliche Viskositätszunahme auf. Das so erhaltene Zwischenprodukt besitzt einen Gehalt an protonierbaren Amingruppen von etwa 36,5 mequ./100 g.

Anschließend kühlt man auf 80°C ab, gibt 154 g Diethylenglykolmonobutylether sowie 39,25 g p-Toluolsulfonsäuremethylester zu und lässt eine weitere Stunde bei dieser Temperatur rühren. Man erhält ein klares, schwach bräunliches Öl, welches keine protonierbären Amingruppen mehr aufweist, und welches in Wasser unter leichtem Rühren und Ausbildung einer Emulsion löslich ist.

### Beispiel 5:

Man verfährt wie unter Beispiel 4 beschrieben, wobei jedoch nur 19,63 g p-Toluolsulfonsäuremethylester als Alkylierungsmittel zum Einsatz kommen. Das so erhaltene, viskose Öl besitzt noch einen Gehalt an protonierbaren Amingruppen von 14 mequ./100 g. Das Produkt löst sich in Wasser unter leichtem Rühren und Ausbildung einer Emulsion.

### Beispiel 6:

500 g eines α,ω-Dihydrogenpolydiorganosiloxans mit 0,18 Gew.-% Si-gebundenem Wasserstoff und einem Wassergehalt von 35 Gew.-ppm werden mit 664,4 g eines Polyethers der Formel

H₂C=CH-CH₂-(OCH₂CH₂)_{10,7}-OH,

enthaltend 686 Gew.-ppm Wasser, gemischt und auf 100°C erwärmt. Dann werden 2,43 g Hexachloroplatinsäure-Lösung (0,48 %-ig bezogen auf elementares Platin) zudosiert, worauf die Temperatur des Reaktionsgemisches auf 125 °C ansteigt und ein klares Produkt entsteht. Nach einer Stunde bei 100 bis 110°C wird vollständiger Umsatz des Si-gebundenen Wasserstoffs erreicht. Das Polyether-Polysiloxan-Zwischenprodukt hat eine Viskosität von etwa 590 mm²/s bei 25°C.

Es werden nun 55,18 g N,N-Dimethylpropylendiamin, 151,3 g Hexamethylendiisocyanat und 1 Tropfen Di-n-butylzinndilaurat nacheinander zudosiert und eine Stunde bei 100°C rühren gelassen. Währenddessen tritt eine deutliche Viskositätszunahme auf. Das so erhaltene Zwischenprodukt besitzt einen Gehalt an protonierbaren Amingruppen von etwa 39,3 mequ./100 g.

Anschließend gibt man 280 g Diethylenglykolmonobutylether, 16,2 g Essigsäure (100%) sowie 30,82 g Allylglycidylether zu und erwärmt auf 130 °C. Nach etwa 6 Stunden ist die Alkylierungsreaktion beendet. Das klare, bräunliche Produkt besitzt einen Gehalt an protonierbaren Amingruppen von etwa 15,88 mequ./100 g. Es ist in Wasser unter leichtem Rühren und Ausbildung einer Emulsion löslich.

### Beispiel 7:

200 g eines α,ω-Dihydrogenpolydiorganosiloxans mit 0,055 Gew.-% Si-gebundenem Wasserstoff und einem Wassergehalt von 50 Gew.-ppm werden mit 14,6 g Ethylenglycolmonoallylether gemischt und auf 80°C erwärmt. Dann werden 0,34 g Hexachloroplatinsäure-Lösung (0,48 %-ig bezogen auf elementares Platin) zudosiert, worauf die Temperatur des Reaktionsgemisches auf 100 °C ansteigt und ein klares Produkt entsteht. Nach einer Stunde Rühren bei 100°C wird vollständiger Umsatz des Si-gebundenen Wasserstoffs erreicht. Man entfernt alle flüchtigen Bestandteile durch Destillation im Vakuum. Das so erhaltene Polyether-Polysiloxan-Zwischenprodukt hat eine Viskosität von etwa 100 mm²/s bei 25°C und einen OH-Gehalt von etwa 0,52 mequ./g.

Zu 200 g des Polyether-Polysiloxan-Zwischenproduktes werden nun 25,51 g N,N-Bis(dimethylaminopropyl)-2-hydroxy-propylamin und 17,5 g Hexamethylendiisocyanat nacheinander zudosiert und eine Stunde bei 100°C rühren gelassen. Währenddessen tritt eine deutliche Viskositätszunahme auf. Das so erhaltene Zwischenprodukt besitzt einen Gehalt an protonierbaren Amingruppen von etwa 128,4 mequ./100 g.

Anschließend kühlt man auf 80°C ab, gibt 70,4 g Diethylenglykolmonobutylether sowie 38,74 g p-Toluolsulfonsäuremethylester zu und lässt eine weitere Stunde bei dieser Temperatur rühren. Das so erhaltene, viskose Öl besitzt noch einen Gehalt an protonierbaren Amingruppen von 29,5 mequ./100 g. Das Produkt löst sich in Wasser unter leichtem Rühren und Ausbildung einer Emulsion.

### Beispiel 8: Vergleich der Basenstabilität der aus den Beispielen 1-3 und dem Vergleichsbeispiel 1 gewonnenen Microemulsionen.

Die gemäß Beispiel 1, Vergleichsbeispiel 1, Beispiel 2 und Beispiel 3 erhaltenen Emulsionen 1-3 mit 40 Gew.-% Substanzgehalt werden durch Zugabe von Wasser auf einen Aktivgehalt von 5 Gew.-% verdünnt und mit 10%iger Essigsäure auf pH=5 eingestellt. Anschließend titriert man mit 10%iger NaOH-Lösung bis zum Flockungspunkt. Tabelle 1 gibt das Ergebnis der Flockungstitration wieder und belegt die im Vergleich zu nicht-quarternierten Produkten (Vergleichsbeispiel 1) deutlich verbesserte Stabilität der erfindungsgemäßen, hydrophilen Siloxancopolymere und deren wässrige Emulsionen.

**Tabelle 1:**

| **pH =** | **5** | **6** | **7** | **8** | **9** | **10** | **11** | **12** | **13** | **14** |
|---|---|---|---|---|---|---|---|---|---|---|
| **Vergleichsemulsion 1** | + | + | + | +* | - | - | - | - | - | - |
| **Emulsion 1** | + | + | + | + | + | + | + | + | +* | +* |
| **Emulsion 2** | + | + | + | + | + | + | + | +* | +* | +* |
| **Emulsion 3** | + | + | + | + | + | + | + | + | + | +* |

| | | | | | | | | | | |
|---|---|---|---|---|---|---|---|---|---|---|
| * Ausflocken des Produktes nach ca. 48 h Lagerung bei 25°C. +: Emulsion für mind. 14 Tage lagerstabil bei 25°C -: Emulsion nicht stabil | | | | | | | | | | |

## Patentansprüche

1. Hydrophile Siloxancopolymere herstellbar indem
(a) in einem ersten Schritt
Organopolysiloxane (1), die pro Molekül mindestens ein Si-gebundenes Wasserstoffatom, vorzugsweise mindestens zwei Si-gebundene Wasserstoffatome, aufweisen, mit
weitgehend linearen oligomeren oder polymeren Verbindungen (2) der allgemeinen Formel
R¹-(A-CₙH₂ₙ)ₘ-A¹-H (I),
wobei R¹ einen einwertigen gegebenenfalls substituierten Kohlenwasserstoffrest bedeutet, an den Si-H-Gruppen in einer Hydrosilylierungsreaktion angelagert werden können,
A einen zweiwertigen, polaren organischen Rest ausgewählt aus der Gruppe von -O- , -C(O)-O- , -O-C(O)- , -O-C(O)-O- , -C(O)-NH- , -NH-C(O)- , Urethanrest und Harnstoffrest bedeutet,
A¹ einen zweiwertigen, polaren organischen Rest ausgewählt aus der Gruppe von -O- , -NH- und -NR'- (wobei R' einen einwertigen Kohlenwasserstoffrest mit 1 bis 18 Kohlenstoffatomen bedeutet) bedeutet,
n eine ganze Zahl von 1 bis 20 ist und
m gleich 0 oder eine ganze positive Zahl ist,
umgesetzt werden,
(b) in einem zweiten Schritt
die so erhaltenen H-A¹-Gruppen aufweisenden Zwischenprodukte (4) mit organischen Verbindungen (5), die pro Molekül mindestens zwei Isocyanatgruppen aufweisen, umgesetzt werden, wobei die Umsetzung in Anwesenheit von weiteren organischen Verbindungen (6), welche gegenüber Isocyanatgruppen reaktiv sind und mindestens eine tertiäre Amingruppe enthalten, stattfindet, und
wobei die organischen Verbindungen (5), die pro Molekül mindestens zwei Isocyanatgruppen aufweisen, in Mengen von 0,5 bis 1,0 Mol Isocyanatgruppe je Mol der in Summe in den Zwischenprodukten (4) und den organischen Verbindungen (6) enthaltenen, mit Isocyanatgruppen reaktiven Gruppen eingesetzt werden,
(c) in einem dritten Schritt
die Amingruppen-haltigen Zwischenprodukte (7) aus Schritt (b) mit einem Alkylierungsmittel (8) teilweise oder vollständig quarterniert werden,
mit der Maßgabe, dass der Wassergehalt der zur Herstellung der hydrophilen Siloxancopolymere eingesetzten Verbindungen (1) und (2) niedriger ist als 2000 Gew.-ppm, jeweils bezogen auf das Gesamtgewicht von Verbindungen (1) und (2).

2. Hydrophile Siloxancopolymere nach Anspruch 1,
**dadurch gekennzeichnet, dass** als Organopolysiloxane (1) solche der allgemeinen Formel
H_{g}R_{3-g}SiO(SiR₂O)ₒ(SiRHO)ₚSiR_{3-g}H_{g} (III)
wobei R gleich oder verschieden sein kann und einen einwertigen, gegebenenfalls substituierten Kohlenwasserstoffrest mit 1 bis 18 Kohlenstoffatomen je Rest bedeutet,
g 0, 1 oder 2,
o 0 oder eine ganze Zahl von 1 bis 1500 und
p 0 oder eine ganze Zahl von 1 bis 200 ist,
mit der Maßgabe, dass pro Molekül mindestens ein Si-gebundenes Wasserstoffatom, vorliegt,
eingesetzt werden.

3. Hydrophile Siloxancopolymere nach Anspruch 2, **dadurch gekennzeichnet, dass** die Organopolysiloxane (1) α,ω-Dihydrogendiorganopolysiloxane sind.

4. Hydrophile Siloxancopolymere nach einem der Ansprüche 1 bis 3, **dadurch gekennzeichnet, dass** A und A¹ in Formel (I) ein Sauerstoffatom -O- sind.

5. Hydrophile Siloxancopolymere nach einem der Ansprüche 1 bis 4, **dadurch gekennzeichnet, dass** die Verbindung (2) ein Polyether der allgemeinen Formel
H₂C=CH-R²-(OCₙH₂ₙ)ₘ-OH (IV),
wobei R² ein zweiwertiger Kohlenwasserstoffrest mit 1 bis 10 Kohlenstoffatomen ist und
n und m die in Anspruch 1 angegebene Bedeutung haben, ist.

6. Hydrophile Siloxancopolymere nach einem der Ansprüche 1 bis 5, **dadurch gekennzeichnet, dass** die Verbindung (5) ein Diisocyanat der allgemeinen Formel
O=C=N-R³-N=C=O (V),
wobei R³ einen zweiwertigen Kohlenwasserstoffrest mit 4 bis 40 Kohlenstoffatomen je Rest bedeutet, ist.

7. Hydrophile Siloxancopolymere nach einem der Ansprüche 1 bis 6, **dadurch gekennzeichnet, dass** im zweiten Verfahrensschritt (b) als weitere organische Verbindung (6) solche ausgewählt aus der Gruppe der Formeln
HX-R⁵-NR⁴₂ (VI),
HX-R⁶(NR⁴₂)₂ (VII),
HX-R⁷(NR⁴₂)₃ (VIII),
(HX)₂R⁶-NR⁴₂ (IX),
HR⁸N-R⁵-NR⁴₂ (X),
wobei R⁴ einen Rest R, der gegebenenfalls Sauerstoff-, Schwefel- oder Stickstoffatome enthalten kann, vorzugsweise einen Methyl-, Ethyl- oder Propylrest, der gegebenenfalls einen Hydroxy- und/oder peralkyliertem Aminrest enthalten kann, bedeutet,
R⁵ einen zweiwertigen Kohlenwasserstoffrest mit 1 bis 100 Kohlenstoffatomen, bevorzugt mit 1 bis 50 Kohlenstoffatomen, insbesondere bevorzugt mit 1 bis 20 Kohlenstoffatomen, der durch Sauerstoff-, Schwefel- oder Stickstoffatome unterbrochen oder substituiert sein kann, bedeutet,
R⁶ einen dreiwertigen organischen Rest mit 1 bis 100 Kohlenstoffatomen je Rest, vorzugsweise einen dreiwertigen Kohlenwasserstoffrest mit 1 bis 100 Kohlenstoffatomen, bevorzugt mit 1 bis 20 Kohlenstoffatomen, insbesondere bevorzugt mit 1 bis 10 Kohlenstoffatomen, der ein oder mehrere Sauerstoffatome enthält, bedeutet,
R⁷ einen vierwertigen organischen Rest mit 1 bis 100 Kohlenstoffatomen je Rest, vorzugsweise einen vierwertigen Kohlenwasserstoffrest mit 1 bis 20 Kohlenstoffatomen, der ein oder mehrere Sauerstoffatome enthält, bedeutet,
R⁸ Wasserstoffatom oder R⁴ bedeutet, und
X die Bedeutung von Sauerstoffatom oder Schwefelatom, vorzugsweise Sauerstoffatom, besitzt,
eingesetzt werden.

8. Hydrophile Siloxancopolymere nach einem der Ansprüche 1 bis 7, **dadurch gekennzeichnet, dass** im dritten Verfahrensschritt (c) als Alkylierungsmittel (8) solche ausgewählt aus der Gruppe von Methylchlorid, Methyljodid, Dodecylbromid, Benzylchlorid, Chloressigsäure, Dimethylsulfat und p-Toluolsulfonsäuremethylester eingesetzt wird.

9. Verfahren zur Herstellung von hydrophilen Siloxancopolymeren indem
(a) in einem ersten Schritt
Organopolysiloxane (1), die pro Molekül mindestens ein Si-gebundenes Wasserstoffatom, vorzugsweise mindestens zwei Si-gebundene Wasserstoffatome, aufweisen, mit
weitgehend linearen oligomeren oder polymeren Verbindungen (2) der allgemeinen Formel
R¹-(A-CₙH₂ₙ)ₘ-A¹-H (I),
wobei R¹ einen einwertigen gegebenenfalls substituierten Kohlenwasserstoffrest bedeutet, an den Si-H-Gruppen in einer Hydrosilylierungsreaktion angelagert werden können,
A einen zweiwertigen, polaren organischen Rest ausgewählt aus der Gruppe von -O- , -C(O)-O- , -O-C(O)- , -O-C(O)-O- , -C(O)-NH- , -NH-C(O)- , Urethanrest und Harnstoffrest bedeutet,
A¹ einen zweiwertigen, polaren organischen Rest ausgewählt aus der Gruppe von -O- , -NH- und -NR²- (wobei R² einen einwertigen Kohlenwasserstoffrest mit 1 bis 18 Kohlenstoffatomen bedeutet) bedeutet,
n eine ganze Zahl von 1 bis 20 und
m gleich 0 oder eine ganze positive Zahl ist,
umgesetzt werden,
(b) in einem zweiten Schritt die so erhaltenen H-A¹-Gruppen aufweisenden Zwischenprodukte (4) mit organischen Verbindungen (5), die pro Molekül mindestens zwei Isocyanatgruppen aufweisen, umgesetzt werden,
wobei die Umsetzung in Anwesenheit von weiteren organischen Verbindungen (6), welche gegenüber Isocyanatgruppen reaktiv sind und mindestens eine tertiäre Amingruppe enthalten, stattfindet, und
wobei die organischen Verbindungen (5), die pro Molekül mindestens zwei Isocyanatgruppen aufweisen, in Mengen von 0,5 bis 1,0 Mol Isocyanatgruppe je Mol der in Summe in den Zwischenprodukten (4) und den organischen Verbindungen (6) enthaltenen, mit Isocyanatgruppen reaktiven Gruppen eingesetzt werden,
(c) in einem dritten Schritt
die Amingruppen-haltigen Zwischenprodukte (7) aus Schritt (b) mit einem Alkylierungsmittel (8) teilweise oder vollständig quarterniert werden,
mit der Maßgabe, dass der Wassergehalt der zur Herstellung der hydrophilen Siloxancopolymere eingesetzten Verbindungen (1) und (2) niedriger ist als 2000 Gew.-ppm, jeweils bezogen auf das Gesamtgewicht von Verbindungen (1) und (2).

10. Emulsionen enthaltend
(A) hydrophile Siloxancopolymere nach einem der Ansprüche 1 bis 8, und
(B) Wasser.

11. Verfahren zur Herstellung der Emulsionen nach Anspruch 10 durch Vermischen von
(A) hydrophilen Siloxancopolymeren nach einem der Ansprüche 1 bis 8, mit
(B) Wasser.

## Claims

1. Hydrophilic siloxane copolymers preparable by
(a) a first step of reacting
organopolysiloxanes (1) which have at least one silicon-attached hydrogen atom and preferably two or more silicon-attached hydrogen atoms per molecule with
substantially linear oligomeric or polymeric compounds (2) of the general formula
R¹-(A-CₙH₂ₙ)ₘ-A¹-H (I)
where R¹ is a univalent optionally substituted hydrocarbyl radical capable of adding Si-H groups in a hydrosilylation reaction,
A is a bivalent polar organic radical selected from the group consisting of -O-, -C(O)-O-, -O-C(O)-, -O-C(O)-O-, -C(O)-NH-, -NH-C(O)-, urethane radical and urea radical,
A¹ is a bivalent polar organic radical selected from the group consisting of -O-, -NH- and -NR'-(where R' is a univalent hydrocarbyl radical of 1 to 18 carbon atoms),
n is an integer from 1 to 20, and
m is zero or a positive integer,
(b) a second step of reacting
the resulting H-A¹-containing intermediates (4) with organic compounds (5), which have two or more isocyanate groups per molecule, the reaction taking place in the presence of further organic compounds (6), which are reactive toward isocyanate groups and contain at least one tertiary amine group, and
where the organic compounds (5), which have two or more isocyanate groups per molecule, are used in amounts of 0.5 to 1.0 mol of isocyanate group per mole of the sum total of isocyanate-reactive groups present in the intermediates (4) and the organic compounds (6),
(c) a third step
of the amino-containing intermediates (7) from step (b) being partially or completely quaternized with an alkylating agent (8),
with the proviso that the water content of the compounds (1) and (2), which are used for preparing the hydrophilic siloxane copolymers, is lower than 2000 weight ppm, in each case based on the total weight of compounds (1) and (2).

2. Hydrophilic siloxane copolymers according to Claim 1 **characterized in that** the organopolysiloxanes
(1) have the general formula
HgR_{3-g}SiO(SiR₂O)ₒ(SiRHO)ₚSiR_{3-g}Hg (III)
where R in each occurrence may be the same or different and is a univalent optionally substituted hydrocarbyl radical having 1 to 18 carbon atoms per radical,
g is 0, 1 or 2,
o is 0 or an integer from 1 to 1500, and
p is 0 or an integer from 1 to 200,
with the proviso that there is at least one silicon-attached hydrogen atom per molecule.

3. Hydrophilic siloxane copolymers according to Claim 2 **characterized in that** the organopolysiloxanes (1) are α,ω-dihydrodiorganopolysiloxanes.

4. Hydrophilic siloxane copolymers according to any one of Claims 1 to 3 **characterized in that** A and A1 in the formula (I) are an oxygen atom -O-.

5. Hydrophilic siloxane copolymers according to any one of Claims 1 to 4 **characterized in that** the compound (2) is a polyether of the general formula
H₂C=CH=R²-(OCₙH₂ₙ)ₘ-OH (IV)
where R² is a bivalent hydrocarbyl radical of 1 to 10 carbon atoms and
n and m are each as defined in Claim 1.

6. Hydrophilic siloxane copolymers according to any one of Claims 1 to 5 **characterized in that** the compound (5) is a diisocyanate of the general formula
O=C=N-R³-N=C=O (V)
where R³ is a bivalent hydrocarbyl radical having 4 to 40 carbon atoms per radical.

7. Hydrophilic siloxane copolymers according to any one of Claims 1 to 6 **characterized in that** the second step (b) utilizes further organic compounds (6) selected from the group of the formulae
HX-R⁵-NR⁴₂ (VI),
HX-R⁶(NR⁴₂)₂ (VII),
HX-R⁷(NR⁴₂)₃ (VIII),
(HX)₂R⁶-NR⁴₂ (IX),
HR⁸N-R⁵-NR⁴₂ (X),
where R⁴ is an R radical which may optionally contain oxygen, sulphur or nitrogen atoms, preferably a methyl, ethyl or propyl radical which may optionally contain a hydroxyl and/or peralkylated amine radical,
R⁵ is a bivalent hydrocarbyl radical of 1 to 100 carbon atoms, preferably of 1 to 50 carbon atoms and more preferably of 1 to 20 carbon atoms which may be oxygen, sulphur or nitrogen atoms interrupted or substituted,
R⁶ is a tervalent organic radical having 1 to 100 carbon atoms per radical, preferably a tervalent hydrocarbyl radical having 1 to 100 carbon atoms, preferably having 1 to 20 carbon atoms and more preferably having 1 to 10 carbon atoms, which contains one or more oxygen atoms,
R⁷ is a tetravalent organic radical having 1 to 100 carbon atoms per radical, preferably a tetravalent hydrocarbyl radical having 1 to 20 carbon atoms which contains one or more oxygen atoms,
R⁸ is a hydrogen atom or R⁴, and
X is an oxygen atom or a sulphur atom, preferably an oxygen atom.

8. Hydrophilic siloxane copolymers according to any one of Claims 1 to 7 **characterized in that** the third step (c) utilizes an alkylating agent (8) selected from the group consisting of methyl chloride, methyl iodide, dodecyl bromide, benzyl chloride, chloroacetic acid, dimethyl sulphate and methyl p-toluenesulphonate.

9. Process for preparing hydrophilic siloxane copolymers by
(a) a first step of reacting
organopolysiloxanes (1) which have at least one silicon-attached hydrogen atom and preferably two or more silicon-attached hydrogen atoms per molecule with
substantially linear oligomeric or polymeric compounds (2) of the general formula
R¹-(A-CₙH₂ₙ)ₘ-A¹-H (I)
where R¹ is a univalent optionally substituted hydrocarbyl radical capable of adding Si-H groups in a hydrosilylation reaction,
A is a bivalent polar organic radical selected from the group consisting of -O-, -C(O)-O-, -O-C(O)-, -O-C(O)-O-, -C(O)-NH-, -NH-C(O)-, urethane radical and urea radical,
A¹ is a bivalent polar organic radical selected from the group consisting of -O-, -NH- and -NR²⁻(where R² is a univalent hydrocarbyl radical of 1 to 18 carbon atoms),
n is an integer from 1 to 20, and
m is zero or a positive integer,
(b) a second step of reacting
the resulting H-A¹-containing intermediates (4) with organic compounds (5), which have two or more isocyanate groups per molecule,
the reaction taking place in the presence of further organic compounds (6), which are reactive toward isocyanate groups and contain at least one tertiary amine group, and
where the organic compounds (5), which have two or more isocyanate groups per molecule, are used in amounts of 0.5 to 1.0 mol of isocyanate group per mole of the sum total of isocyanate-reactive groups present in the intermediates (4) and the organic compounds (6),
(c) a third step
of the amino-containing intermediates (7) from step (b) being partially or completely quaternized with an alkylating agent (8),
with the proviso that the water content of the compounds (1) and (2), which are used for preparing the hydrophilic siloxane copolymers, is lower than 2000 weight ppm, in each case based on the total weight of compounds (1) and (2).

10. Emulsions comprising
(A) hydrophilic siloxane copolymers according to any one of Claims 1 to 8, and
(B) water.

11. Process for producing the emulsions according to Claim 10 by mixing of
(A) hydrophilic siloxane copolymers according to any one of Claims 1 to 8, with
(B) water.

## Revendications

1. Copolymères de siloxane hydrophiles pouvant être préparés par
(a) dans une première étape
mise en réaction d'organopolysiloxanes (1) qui comportent par molécule au moins un atome d'hydrogène lié à Si, de préférence au moins deux atomes d'hydrogène liés à Si, avec
des composés oligomères ou polymères (2) essentiellement linéaires, de formule générale
R¹-(A-CₙH₂ₙ)ₘ-A¹-H (I),
dans laquelle R¹ représente un radical hydrocarboné monovalent éventuellement substitué, auquel des groupes Si-H peuvent être fixés par addition dans une réaction d'hydrosilylation,
A représente un radical organique polaire divalent, choisi dans l'ensemble constitué par -O-, -C(O)-O-, -O-C(O)-, -O-C(O)-O-, -C(O)-NH-, -NH-C(O)-, un radical uréthanne et un radical urée,
A¹ représente un radical organique polaire divalent, choisi dans l'ensemble constitué par -O-, -NH- et -NR'- (R' représentant un radical hydrocarboné monovalent ayant de 1 à 18 atomes de carbone),
n est un nombre entier allant de 1 à 20 et
m est égal à 0 ou est un nombre entier positif,
(b) dans une deuxième étape
mise en réaction des produits intermédiaires (4) ainsi obtenus, comportant des groupes H-A¹, avec des composés organiques (5) qui comportent par molécule au moins deux groupes isocyanate, la réaction ayant lieu en présence d'autres composés organiques (6) qui sont réactifs vis-à-vis de groupes isocyanate et contiennent au moins un groupe amino tertiaire, et
les composés organiques (5), qui comportent par molécule au moins deux groupes isocyanate, étant utilisés en quantités de 0,5 à 1,0 mole de groupe isocyanate par mole des groupes réactifs avec des groupes isocyanate, contenus au total dans les produits intermédiaires (4) et les composés organiques (6),
(c) dans une troisième étape
les produits intermédiaires (7) contenant des groupes amino, provenant de l'étape (b), sont partiellement ou totalement rendus quaternaires avec un agent d'alkylation (8),
étant entendu que la teneur en eau des composés (1) et (2) utilisés pour la préparation des copolymères de siloxane hydrophiles est inférieure à 2 000 ppm en poids, chaque fois par rapport au poids total des composés (1) et (2).

2. Copolymères de siloxane hydrophiles selon la revendication 1, **caractérisés en ce qu'**on utilise en tant qu'organopolysiloxanes (1) ceux de formule
H_{g}R_{3-g}SiO(SiR₂O)ₒ(SiRHO)ₚSiR_{3-g}Hg (III)
dans laquelle R peut être identique ou différent et représente un radical hydrocarboné monovalent, éventuellement substitué, ayant de 1 à 18 atomes de carbone par radical,
g est 0, 1 ou 2,
o est 0 ou un nombre entier allant de 1 à 1 500 et
p est 0 ou un nombre entier allant de 1 à 200,
étant entendu qu'au moins un atome d'hydrogène lié à Si est présent par molécule.

3. Copolymères de siloxane hydrophiles selon la revendication 2, **caractérisés en ce que** les organopolysiloxanes (1) sont des α,ω-dihydrogénodiorganopolysiloxanes.

4. Copolymères de siloxane hydrophiles selon l'une quelconque des revendications 1 à 3, **caractérisés en ce que** A et A¹ dans la formule (I) représentent un atome d'oxygène.

5. Copolymères de siloxane hydrophiles selon l'une quelconque des revendications 1 à 4, **caractérisés en ce que** le composé (2) est un polyéther de formule générale
H₂C=CH-R²-(OCₙH₂ₙ)ₘ-OH (IV),
dans laquelle R² est un radical hydrocarboné divalent ayant de 1 à 10 atomes de carbone et
n et m ont les significations indiquées dans la revendication 1.

6. Copolymères de siloxane hydrophiles selon l'une quelconque des revendications 1 à 5, **caractérisés en ce que** le composé (5) est un diisocyanate de formule générale
O=C=N-R³-N=C=O (V),
dans laquelle R³ est un radical hydrocarboné divalent ayant de 4 à 40 atomes de carbone par radical.

7. Copolymères de siloxane hydrophiles selon l'une quelconque des revendications 1 à 6, **caractérisés en ce que** dans la deuxième étape (b) du processus on utilise comme autre composé organique (6) un tel composé choisi dans l'ensemble des composés de formules
HX-R⁵-NR⁴₂ (VI),
HX-R⁶(NR⁴₂)₂ (VII),
HX-R⁷(NR⁴₂)₃ (VIII),
(HX)₂R⁶-NR⁴₂ (IX),
HR⁸N-R⁵-NR⁴₂ (X),
dans lesquelles R⁴ représente un radical R qui peut éventuellement contenir des atomes d'oxygène, de soufre ou d'azote, de préférence un radical méthyle, éthyle ou propyle, qui peut éventuellement contenir un radical amino hydroxylé et/ou peralkylé,
R⁵ représente un radical hydrocarboné divalent ayant de 1 à 100 atomes de carbone, de préférence de 1 à 50 atomes de carbone, de façon particulièrement préférée de 1 à 20 atomes de carbone, qui peut être interrompu ou substitué par des atomes d'oxygène, de soufre ou d'azote,
R⁶ représente un radical organique trivalent ayant de 1 à 100 atomes de carbone par radical, de préférence un radical hydrocarboné trivalent ayant de 1 à 100 atomes de carbone, encore mieux de 1 à 20 atomes de carbone, de façon particulièrement préférée de 1 à 10 atomes de carbone, qui contient un ou plusieurs atomes d'oxygène,
R⁷ représente un radical organique tétravalent ayant de 1 à 100 atomes de carbone par radical, de préférence un radical hydrocarboné tétravalent ayant de 1 à 20 atomes de carbone, qui contient un ou plusieurs atomes d'oxygène,
R⁸ représente un atome d'hydrogène ou R⁴, et
X a la signification d'un atome d'oxygène ou d'un atome de soufre, de préférence d'un atome d'oxygène.

8. Copolymères de siloxane hydrophiles selon l'une quelconque des revendications 1 à 7, **caractérisés en ce que** dans la troisième étape (c) du processus on utilise comme agent d'alkylation (8) un tel agent choisi dans le groupe constitué par le chlorure de méthyle, l'iodure de méthyle, le bromure de dodécyle, le chlorure de benzyle, l'acide chloracétique, le sulfate de diméthyle et le p-toluènesulfonate de méthyle.

9. Procédé pour la préparation de copolymères de siloxane hydrophiles, par
(a) dans une première étape
mise en réaction d'organopolysiloxanes (1) qui comportent par molécule au moins un atome d'hydrogène lié à Si, de préférence au moins deux atomes d'hydrogène liés à Si, avec
des composés oligomères ou polymères (2) essentiellement linéaires, de formule générale
R¹-(A-CₙH₂ₙ)ₘ-A¹-H (I),
dans laquelle R¹ représente un radical hydrocarboné monovalent éventuellement substitué, auquel des groupes Si-H peuvent être fixés par addition dans une réaction d'hydrosilylation,
A représente un radical organique polaire divalent, choisi dans l'ensemble constitué par -O-, -C(O)-O-, -O-C(O)-, -O-C(O)-O-, -C(O)-NH-, -NH-C(O)-, un radical uréthanne et un radical urée,
A¹ représente un radical organique polaire divalent, choisi dans l'ensemble constitué par -O-, -NH- et -NR²- (R² représentant un radical hydrocarboné monovalent ayant de 1 à 18 atomes de carbone),
n est un nombre entier allant de 1 à 20 et
m est égal à 0 ou est un nombre entier positif,
(b) dans une deuxième étape
mise en réaction des produits intermédiaires (4) ainsi obtenus, comportant des groupes H-A¹, avec des composés organiques (5) qui comportent par molécule au moins deux groupes isocyanate, la réaction ayant lieu en présence d'autres composés organiques (6) qui sont réactifs vis-à-vis de groupes isocyanate et contiennent au moins un groupe amino tertiaire, et
les composés organiques (5), qui comportent par molécule au moins deux groupes isocyanate, étant utilisés en quantités de 0,5 à 1,0 mole de groupe isocyanate par mole des groupes réactifs avec des groupes isocyanate, contenus au total dans les produits intermédiaires (4) et les composés organiques (6),
(c) dans une troisième étape
les produits intermédiaires (7) contenant des groupes amino, provenant de l'étape (b), sont partiellement ou totalement rendus quaternaires avec un agent d'alkylation (8),
étant entendu que la teneur en eau des composés (1) et (2) utilisés pour la préparation des copolymères de siloxane hydrophiles est inférieure à 2 000 ppm en poids, chaque fois par rapport au poids total des composés (1) et (2).

10. Emulsions contenant
(A) des copolymères de siloxane hydrophiles selon l'une quelconque des revendications 1 à 8, et
(B) de l'eau.

11. Procédé pour la préparation des émulsions selon la revendication 10, par mélange
(A) de copolymères de siloxane hydrophiles selon l'une quelconque des revendications 1 à 8, avec
(B) de l'eau.
